# EUROPEAN PATENT APPLICATION

(11) **EP 4 455 864 A1**
(43) Date of publication of application: **30.10.2024**
(21) Application number: 22916832.3
(22) Date of filing: 30.12.2022
(51) Int. Cl.: G06F 8/65, G06F 9/451, G06F 9/54, G06F 9/4401

(54) **HOME APPLIANCE, HOME APPLIANCE UPGRADE METHOD AND HOME APPLIANCE UPGRADE SYSTEM**

(30) Priority: 31.12.2021 KR 20210194668
(71) Applicant: LG Electronics Inc., Yeongdeungpo-gu Seoul 07336 (KR)
(72) Inventor: LEE, Mira, Seoul 08592 (KR); JUNG, Eunsoo, Seoul 08592 (KR)
(74) Representative: Vossius & Partner Patentanwälte Rechtsanwälte mbB
(86) International application number: PCT/KR2022/021701
(87) International publication number: WO 2023/128691

(57) **Abstract**

The present invention relates to a home appliance, a home appliance upgrade method and a home appliance upgrade system. The home appliance upgrade system according to the present invention allows a home appliance to be software-upgraded directly in the appliance itself without linking with an application (app) of a user terminal. To this end, the home appliance upgrade system allows the home appliance to download and store new upgrade software from a management server without user intervention, output an upgrade notification message on the screen thereof when power is turned on or a specific function starts, and record, in a control unit of the appliance, the software selected by a user without being controlled by a smart phone app, so that an upgrade thereof can be executed in the appliance device itself. According to the present invention, the home appliance can be upgraded to new software in the appliance itself without using a smart phone, and thus cumbersome operations in which a user goes back and forth between a home appliance and a smart phone are eliminated.

## Description

### [Technical Field]

The present disclosure relates to a home appliance, a home appliance upgrade method and a home appliance upgrade system where an upgrade of software is performed directly in a home appliance itself comprising a refrigerator, a washing machine, and an air conditioner and the like without intervention of an app of a user terminal.

### [Background Art]

Home appliances such as an electrical appliance, an electronic product and the like are placed and operates in a variety of environments, and depending on their launch time points, have a different structure or different component. After they are launched and sold, their functions may need to be upgraded or a function may need to be added to them.

In most cases, the firmware of a home appliance is upgraded to solve an error of the home appliance and the like after the home appliance is sold, and in the case where a new function that meets the needs of the user is added to a home appliance for an upgrade of the home appliance after the home appliance is launched, the user may need to purchase a new home appliance with the new function. It is difficult to provide a newly added function reflecting a change in the customer's lifestyle or a technical advancement to an existing home appliance.

Under the circumstances, there is a growing need to develop a technology for enabling the user to readily upgrade an individual function added or check an upgradable function, request an upgrade and check an upgrade state or upgrade results, such that the user may manage a variety of home appliances connecting to the Internet.

### [Description of the Invention]

### [Technical Problems]

The objective of the present disclosure is to provide a home appliance, a home appliance upgrade method and a home appliance upgrade system in which a home appliance itself may upgrade software directly without intervention of an app of a user terminal in the appliance itself comprising a refrigerator, a washing machine, an air conditioner and the like.

Aspects according to the present disclosure are not limited to the above ones, and other aspects and advantages that are not mentioned above may be clearly understood from the following description and may be more clearly understood from the embodiments set forth herein. Additionally, the aspects and advantages in the present disclosure may be realized via means and combinations thereof that are described in the appended claims.

### [Technical Solutions]

A home appliance according to the present disclosure comprises: a communication unit configured to communicate with a management server; a user interface unit configured to output specific information to a user and to receive input information; and a control unit in which software is installed. The communication unit may be configured to transmit an upgrade inquiry message of the home appliance to the management server without user intervention, to download at least one or more of upgrade software data received from the management server, based on the upgrade inquiry message, to transmit a download completion message to the management server in a case where the download is completed, configured to output an upgrade notification message to the user interface unit, to receive a selection message selecting at least a portion of software among the at least one or more of upgrade software from the user interface unit, and to write the at least a portion of software to the control unit, based on the selection message.

The upgrade notification message may comprise a guide message configured to ask whether to use a new function, based on reception of an upgrade, a confirmation button configured to proceed with an upgrade, and a previous button configured to cancel an upgrade and to return to a previous state.

As the confirmation button is input, the communication unit may display a warning message notifying time taken for an upgrade and notifying that the use of a product is limited during an upgrade, an immediate upgrade button configured to execute an upgrade immediately, and a reservation button configured to select a time point when an upgrade is possible, on a screen of the user interface unit.

As the reservation button is input, the communication unit may provide a screen on which a plurality of time points is scrolled and a specific time point is selected through the user interface unit.

The communication unit may transmit the upgrade inquiry message to the management server each time power is turned on, and download at least one or more of upgrade software data received from the management sever and store the at least one or more of upgrade software data in a storage unit, based on the upgrade inquiry message.

In relation to the software written to the control unit, the communication unit may completely activate all of a plurality of functions without selecting and activating a specific functions among the plurality of functions, mark all the plurality of functions as activated, and display all the plurality of functions on the screen of the user interface unit, such that all the plurality of functions is included in an upgrade list.

In relation to the software written to the control unit, the communication unit may display a software installation completion message on the screen of the user interface unit, as confirmation of the software installation completion message is input, display a list of activatable functions in the written software on the screen of the user interface unit, and as at least one or more of functions are selected in the list of functions, write the at least one or more of functions selected to the control unit and activates the at least one or more of functions selected.

The user interface unit may provide an upgrade center configured to collect upgradable software and contents of all of upgradable home appliances in a list and to show the list to an upgrade-exclusive management page, on the screen thereof.

The home appliance may provide an upgrade list in relation to at least one or more of software completely written to and installed in the control unit, to the upgrade center, among the at least one or more of upgrade software data completely downloaded, and in the upgrade list, one software among the at least one or more of software completely installed may comprise a list of a plurality of functions marked as activated or non-activated.

As at least one or more of functions among a plurality of functions marked as non-activated are selected and function installation is input in the upgrade center, the communication unit may write the at least one or more of functions selected to the control unit and activate the at least one or more of functions selected, and mark the at least one or more of functions selected as activated in the upgrade list and display the at least one or more of functions selected on the screen of the user interface unit.

The communication unit may provides a list of upgradable software to the upgrade center, among the at least one or more of upgrade software data completely downloaded, and receive a selection message selecting at least a portion of software in the list of upgradable software from the user interface unit, and based on the selection message, write the at least a portion of software to the control unit.

The communication unit may output the upgrade notification message to the user interface unit at a time point when a unique function of a home appliance starts or each time power is turned on, and after the unique function of the home appliance starts, the communication unit may not write at least a portion of software to the control unit, among the at least one or more of upgrade software, and in the upgrade center, only check a completely upgraded list and a list of upgradable software among the at least one or more of upgrade software data.

The at least one or more of upgrade software data may comprise at least a portion of at least one of firmware data and at least one of content program data.

The at least one or more of upgrade software data may comprise firmware data, and further comprise at least one of content program data executed on the firmware, and the at least one of content program data respectively may be any one of data in relation to a content program that is not installed in the home appliance.

The communication unit may output the upgrade notification message to the user interface unit and transmit the upgrade notification message to an app of a user terminal, and the communication unit may receive a selection message selecting at least a portion of software from the app of the user terminal, among the at least one or more of upgrade software, and write the at least a portion of software to the control unit, based on the selection message.

As specific contents are selected and activated in the written software and a function of the specific contents is manipulated through the user interface unit, the control unit to which the software is written may add the function of the specific contents into the upgrade center, and as the function of the specific contents is performed based on an input from the user interface unit, the control unit may display relevant sub items in the upgrade center such that the relevant sub items are selected.

As specific contents are selected from the written software and activated, the control unit may output a guide message guiding the user to see an additional function of the specific contents upgraded on the screen of the user interface unit, and as confirmation of the guide massage is input, the control unit may display the upgrade center on the screen of the user interface unit, and provides the sub items of the specific contents in a list, in the upgrade center.

In a case where the previous button configured to cancel an upgrade and return to a precious state is input from the user interface unit, the communication unit may display an initial screen comprising the upgrade center on the user interface unit, and as the upgrade center is selected on the initial screen, the communication unit may display the upgrade notification message on a first page of the upgrade center.

A home appliance upgrade method according to the present disclosure may comprise: (a) transmitting an upgrade inquiry message of the home appliance to a management server without user intervention by a communication unit; (b) downloading and receiving at least one or more of upgrade software data received from the management server by the communication unit, based on the upgrade inquiry message; (c) transmitting a download completion message to the management server by the communication unit; (d) outputting an upgrade notification message to the user interface unit by the communication unit; (e) receiving a selection message selecting at least a portion of software by the communication unit among the at least one or more of upgrade software from the user interface unit, without linking with an app of a user terminal; and (f) writing the at least a portion of software to a control unit by the communication unit, based on the selection message.

In (e), the selection message may be one of an immediate upgrade message executing an upgrade immediately or a reservation message comprising an upgrade execution time point, and in a case where the selection message is the reservation message, the communication unit may write the at least a portion of software to the control unit if a unique function of an appliance is performed when an upgrade is executed based on the reservation message at the upgrade execution time point, after the unique function of the appliance ends.

Additionally, rebooting may be performed after (e), and as specific contents are selected from the written software through the user interface unit after the rebooting, in relation to setting of a function in relation to the software written to the control unit, the communication unit may activate the specific contents selected, and set a function of the specific contents.

As the function of the specific contents is set in the written software and the function of the specific contents is manipulated through the user interface unit, the control unit may add the function of the specific contents into the upgrade center, and as the function of the specific contents is performed based on an input from the user interface unit, the control unit may display relevant sub items in the upgrade center such that the relevant sub items are selected.

Further, in (f), the communication unit may write an upgrade state as displayable power or as power capable of displaying numbers in a segment display, on the screen of the user interface unit, when the communication unit writes the at least a portion of software to the control unit based on the selection message.

In (d), the communication unit may output the upgrade notification message to the user interface unit at a time point when a unique function of a home appliance starts or each time power is turned on, and in (f), after the unique function of the home appliance starts, the communication unit may not write at least a portion of software to the control unit, among the at least one or more of upgrade software, and in the upgrade center, only check a completely upgraded list and a list of upgradable software among the at least one or more of upgrade software data.

Further, after (f), in a case where the communication unit provides an upgrade list in relation to at least one or more of software completely written to and installed in the control unit to the upgrade center among the at least one or more of upgrade software data completely downloaded, at least one or more of functions are selected among a plurality of functions marked as non-activated in the upgrade list provided to the upgrade center, and function installation is input, the communication unit may write the at least one or more of functions selected to the control unit, activate the at least one or more of functions selected, and mark the at least one or more of functions selected as activated in the upgrade list and display the at least one or more of functions selected on the screen of the user interface unit.

A home appliance upgrade system according to the present disclosure may comprise: a management server configured to provide at least one or more of upgrade software; and a home appliance which comprises a user interface unit configured to display a list of the at least one or more of upgrade software, receives a selection message selecting at least a portion of software among the at least one or more of upgrade software from the user interface unit, and writes the at least a portion of software selected to a control unit based on the selection message.

The home appliance may comprise a memory configured to download and receive the at least one or more of upgrade software in advance from the management server and store the same, and write the at least a portion of software selected to the control unit from the memory based on the selection message received.

The home appliance may download and receive the selected software from the management server and store the same in the memory based on the selection message received, and write the same to the home appliance control unit.

### [Advantageous Effects]

According to the present disclosure, the user of an electrical appliance may perform an upgrade of the software of the electrical appliance directly in the electrical appliance itself without using an app of a smart phone.

According to the present disclosure, the user using only an electrical appliance instead of an app of a smart phone may check the occurrence of an upgrade immediately when the user uses the electrical appliance.

According to the present disclosure, the user using only an electrical appliance may check the occurrence of an upgrade immediately when the user uses the electrical appliance, and immediately perform an upgrade of the software of the electrical appliance with no need to go to a place where there is a smart phone.

According to the present disclosure, in the case where new software is downloaded to an electrical appliance, an upgrade notification message may be displayed on the screen of the electrical appliance, and notified to an app of a smart phone, such that an upgrade may be performed through the smart phone.

According to the present disclosure, an individual function of an electrical appliance may be selected depending on a user terminal or a button input to execute an upgrade among software data downloaded to the electrical appliance.

According to the present disclosure, anew function may be controlled based on an app of a user terminal and an input of a button of a product through setting information of an individual function upgraded of the electrical appliance.

According to the present disclosure, the user may immediately perform an upgrade and use a new function without moving between an electrical appliance and a smart phone, from a time point when the user recognizes the occurrence of an upgrade to a time point when the user performs an upgrade, at a time when the user uses the electrical appliance.

Specific effects are described along with the above-described effects, in the section of detailed description.

### [Brief Description of the Drawings]

FIGS. 1 and 2 are block diagrams schematically showing an entire configuration of a home appliance upgrade system of an embodiment.
FIG. 3 is a block diagram showing a schematic configuration of a home appliance 10 of one embodiment.
FIG. 4 is a block diagram showing a schematic configuration of a user terminal 20 of one embodiment.
FIG. 5 is a block diagram showing a schematic configuration of a management server 30 of one embodiment.
FIG. 6 is a flowchart showing a basic upgrade method of the home appliance of one embodiment.
FIGS. 7 and 8 are flowcharts showing a home appliance upgrade method of one embodiment.
FIG. 9 is a view showing an example of a display of an upgrade notification screen in a case where new software is completely downloaded to a home appliance of an embodiment.
FIG. 10 is a view showing an upgrade execution screen or a reservation screen in relation to new software in a home appliance of an embodiment.
FIG. 11 is a view showing an example of installation of new software only without activation of a function in a home appliance of an embodiment.
FIG. 12 is a view showing an example of selection and activation of each function in new software installed in a home appliance of an embodiment.
FIG. 13 is a view showing an example of provision of an upgrade center enabling a check of an upgrade list in a home appliance of an embodiment.
FIG. 14 is a view showing an upgrade process of another embodiment.

### [Description of Preferred Embodiments]

The above-described aspects, features and advantages are specifically described hereinafter with reference to accompanying drawings such that one having ordinary skill in the art to which the present disclosure pertains may easily embody the technical spirit of the subject matter of the disclosure.

In the disclosure, detailed description of known technologies in relation to the subject matter of the disclosure is omitted if it is deemed to make the gist of the disclosure unnecessarily vague.

Hereinafter, embodiments according to the disclosure are specifically described with reference to the accompanying drawings such that one having ordinary skill in the art may embody the subject matter of the present disclosure readily. The subject matter of the present disclosure may be embodied in various different forms, and not limited to the embodiments set forth herein.

For clarity in description, particulars in no relation to the description of the subject matter of the present disclosure are omitted, and throughout the disclosure, identical or similar components may be given identical reference numerals.

Some embodiments according to the present disclosure are specifically described with reference to illustrative embodiments. Although identical components are illustrated in different drawings, the components may be given identical reference numerals.

In the disclosure, detailed description of known configurations or functions in relation to the subject matter of the disclosure is omitted if it is deemed to make the gist of the disclosure unnecessarily vague.

Terms such as first, second, A, B, (a), (b) and the like may be used to describe the components of the present disclosure. The terms are merely used to distinguish one component from another component, and are not intended to limit the essence, order, sequence, number, and the like of the components. When any one component is described as being "connected", "coupled" or "connected" to another component, any one component may be directly connected or coupled to another component, but an additional component may be "interposed" between the two components, or the two components may be "connected", "coupled" or "connected" by an additional component.

In addition, the components may be subdivided for convenience of description in embodying the subject matter of the present disclosure, but the components may be embodied in one device or module or one component may be segmented and embodied in a plurality of devices or modules.

First, an upgrade of a home appliance described in the present disclosure refers to an upgrade of software installed in the home appliance. The software may comprise firmware for operation of a control unit (i.e., a micom) and a content program executed on firmware. In an example, the content program may be a program for setting a background screen of a display unit of a washing machine, a program for setting an administration course of a washing machine, and the like.

In addition, an upgrade process is defined as comprising a download procedure and an upgrade procedure. The download procedure is a procedure in which software data for writing software is received and stored in a home appliance. The upgrade procedure is a procedure in which software data stored in the home appliance is written to a control unit or a micom.

The home appliance may include a control unit. The control unit executes specific software to embody a function desired by the user.

After the sale of home appliances, manufacturers may only provide simple assist such as a correction of a program error, and the like. Accordingly, when a new home appliance with new functions is released, the user may need to purchase a new home appliance. That is, the user may need to replace an existing home appliance with a new home appliance in order to use new functions, which causes user dissatisfaction. To solve the problem, the user may upgrade the software of a home appliance to improve or add functions of the home appliance.

Hereinafter, the home appliance according to the present disclosure is a device comprising an electrical appliance. The home appliance enables a continuous upgrade of a function of an electrical appliance. To this end, the home appliance may connect to a management server based on a communication network.

In the present disclosure, an upgrade is mainly described. An upgrade according to the present disclosure comprises replacement, correction, cancelation, addition and the like of all or part of a software module or data required by a software module.

Additionally, the upgrade may be performed based on a variety of communication methods such as a wired method or a wireless method and the like. Further, the upgrade may be performed in such a way that a storage medium in which software needed for an upgrade is installed is coupled to a home appliance depending on the properties of the home appliance.

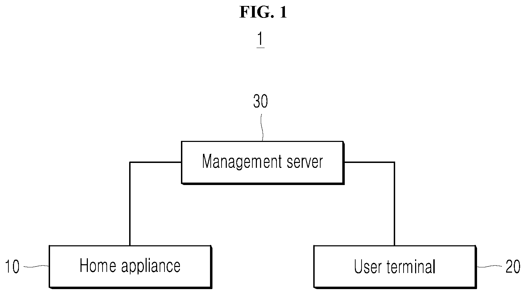

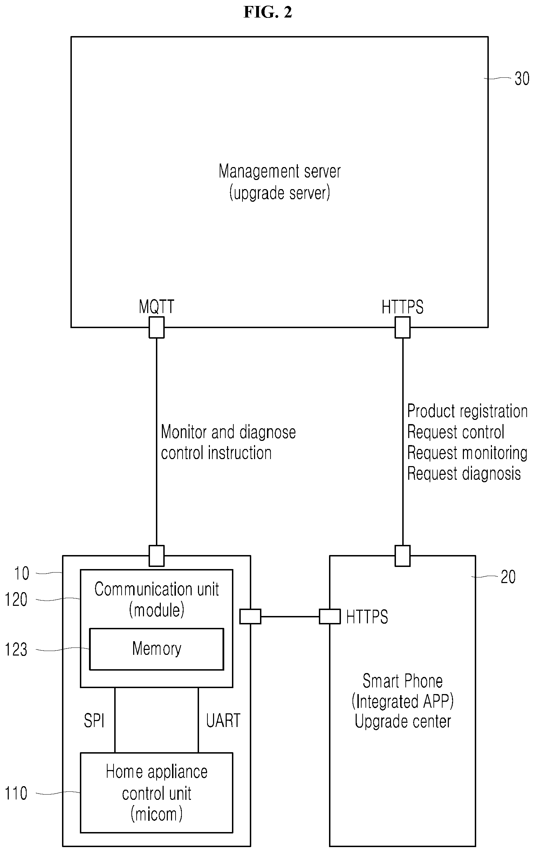

FIGS. 1 and 2 are block diagrams schematically showing an entire configuration of a home appliance upgrade system of an embodiment.

Referring to FIG. 1 and FIG. 2, a home appliance upgrade system 1 (hereinafter, a "system") of an embodiment may comprise a home appliance 10, a user terminal 20 and a management server 30.

The home appliance 10 may denote an electronic product that is installed in a residential space of the user and performs a unique function. In an example, the home appliance 10 may comprise a refrigerator, an air conditioner, a washing machine, a TV, a dryer, an air purifier, a medical device, a microwave oven, an electric range, an oven and the like.

The home appliance 10 may have a communication interface or a communication unit and the like needed to perform communication in a wired or wireless manner, mounted thereon. Additionally, the home appliance 10 may provide information on an upgrade to the user, based on an output of visual information or acoustic information. Hereinafter, the home appliance 10 may be referred to as one of a "household appliance 10", an "electrical appliance 10", an "appliance 10", and a "product 10".

FIG.2 shows specific communication among a management server and a home appliance, and a user terminal of one embodiment. In the configuration of FIG. 2, some components are only displayed, but components are not limited.

A management server 30 is an upgrade server that stores upgrade software and transmits the upgrade software to the home appliance 10.

A user terminal 20 may set a network of the home appliance 10.

The home appliance 10 comprises an electrical appliance providing an IoT function. The home appliance 10 may comprise a communication unit 120, i.e., a modem, a storage unit 123, e.g., a memory, and a home appliance control unit 110, e.g., a micom.

The communication unit 120 and the home appliance control unit 110 may perform communication by using a universal asynchronous receiver/transmitter (UART) communication protocol and a serial peripheral interface (SPI) communication protocol. Certainly, in addition to the UART communication protocol or the SPI communication protocol, the communication unit 120 the home appliance control unit 110 may transceiver information, based on a variety of serial/parallel communication methods, a variety of synchronous/asynchronous communication methods and the like. The home appliance control unit 110 comprises a function control unit in charge of one or more functions of the home appliance, an interface control unit monitoring installation of the functions and upgrade of a product such as an LCD, an LED, a speaker or a buzzer and the like, and the like.

The home appliance 10 and the management server 30 may perform communication by using a message queuing telemetry transport (MQTT) communication protocol. For example, the management server 30 may transceive a message in relation to a control instruction, monitoring, and a diagnosis with the home appliance 10 by using the MQTT communication method.

The home appliance 10 and the user terminal 20 may perform communication by using a hyper text transfer protocol over secure socket layer (HTTPS) communication protocol. For example, the management server 30 may transceiver a message in relation to a product registration, a control request, a monitoring request, a diagnosis request with the user terminal 20 by using the HTTPS communication protocol.

The home appliance 10 may transmit a download inquiry message to the management server 30 in a regular cycle or each time the home appliance 10 communicably connects to the management server 30.

The user terminal 20 and the management server 30 may also transceive information and data by using the HTTPS communication protocol.

The user terminal 20 may be a device carried or possessed by the user. In an example, the user terminal 20 may comprise a smart phone, a lap top, a tablet PC, a smart TV, a smart watch and the like.

The user terminal 20 may be a smart phone in which an integrated application for managing and controlling home appliances 10 is installed. The user terminal 20 may provide an upgrade center providing upgrade management and information in relation to software data, in the form of a menu, on an application.

The management server 30 may be a device that manages the home appliance 10 remotely. The management server 30 may communicably connect to the home appliance 10 through a communication network. Additionally, the management server 30 may communicably connect to the user terminal 20, and manage the home appliance 10 in link with the user terminal 20.

In particular, the management server 30 may store information for upgrading the home appliance 10. The information stored in the management server 30 may comprise software data installed in the home appliance 10, information on the home appliance 10, information on the user and the like. The management server 30 may provide at least one or more of upgrade software. For example, the management server 30 may provide at least one or more of software data to be upgraded / at least one or more of software data for an upgrade to the home appliance 10. The software data may comprise data on firmware (i.e., firmware data) of the home appliance 10 and data on a content program (i.e., content program data) executed on firmware.

In the case where the management server 30 receives new software data uploaded, through an upgrade management web page, the management server 30 may automatically download the new software data to the home appliance 10 each time a download is inquired.

In the home appliance 10, the communication unit 120 may automatically download and receive software data from the management server 30, store the software data in the memory 123 of the communication unit 120, and transmit a download completion message to the management server 30.

When receiving the download completion message, the management server 30 may transmit a preparation instruction message instructing a transition to an upgrade preparation state to the home appliance 10.

The home appliance 10 may transition to the upgrade preparation state according to the preparation instruction message received, and display an upgrade notification message on a screen thereof.

The home appliance 10 may perform an upgrade of software data input-selected through the screen, among software data. That is, in the home appliance 10, the home appliance control unit 110 move software of an individual function selected by the user, among the software data download, from the memory 123 of the communication unit 120, and writes the software in the memory of the home appliance control unit 110.

### [Detailed Description of Exemplary Embodiments]

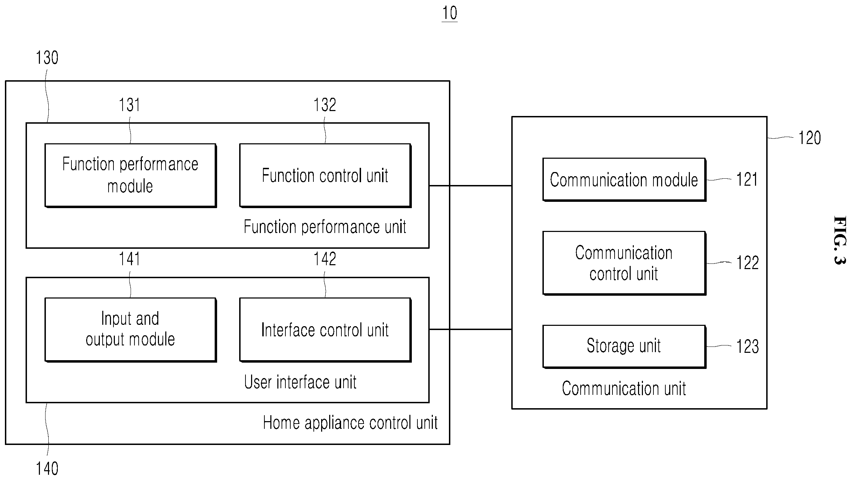

Hereinafter, the configurations of the home appliance 10, the user terminal 20 and the management server 30 are specifically described with reference to FIG. 3 to FIG. 5.

FIG. 3 is a block diagram showing a schematic configuration of a home appliance 10 of one embodiment.

Referring to FIG. 3, the home appliance 10 of the embodiment may comprise a home appliance control unit 110 and a communication unit 120. The home appliance control unit 110 may comprise a function performance unit 130 and a user interface unit 140.

Herein, the configuration of the home appliance 10 is not limited to the configuration illustrated in FIG. 3, and a variety of additional components may be included in the home appliance 10.

The communication unit 120, the function performance unit 130 and the user interface unit 140 may transceive data with one another through a local bus.

The home appliance 10 may comprise two or more control units in which software is installed. Herein, the two or more control units, for example, may comprise a function control unit 132, an interface control unit 142 and the like.

The home appliance control unit 110 may control entire operations of the home appliance 10. Accordingly, the home appliance control unit 110 may be embodied as a micom illustrated in FIG. 2. The home appliance control unit 110 may operate based on main firmware.

Though not illustrated in the drawing, the home appliance control unit 110 may comprise a processor and an internal memory.

The processor may comprise one or more of a central processing unit (CPU), an application processor or a communication processor. The processor may operate based on firmware and execute one or more of instructions in relation to control of the home appliance 10.

The internal memory may be a volatile and/or non-volatile memory. The internal memory may store firmware, and store one or more of instructions in relation to control of the home appliance 10.

The communication unit 120 may communicate with the management server 30.

In particular, the communication unit 120 may receive software data such as firmware data and content program data from the management sever 30, store the received software data, and transmit the stored software data to at least one of the home appliance control unit 110, the function performance unit 130 and the user interface unit 140.

The communication unit 120 may transmit an upgrade inquiry message of the home appliance to the management server 130 without user intervention. The communication unit 120 may download at least one or more of upgrade software data received from the management server 30, based on the upgrade inquiry message. The communication unit 120 transmits an upgrade inquiry message to the management server 30 each time power is turned on, and based on the upgrade inquiry message, download and store at least one or more of upgrade software data received from the management server 30 in the storage unit 123. In the case where the download is completed, the communication unit 120 may transmit a download completion message to the management server 30.

The communication unit 120 may display an upgrade notification message to the user interface unit 140. The communication unit 120 may receive a selection message selecting at least a portion of software among at least one or more of upgrade software from the user interface unit 140, without linking with the app of the user terminal 20. The communication unit 120 may write at least a portion of software to a corresponding control unit, among two or more control units 110, 132, 142, based on the selection message.

The communication unit 120 may transmit an upgrade notification message to the app of the user terminal 20 while displaying the upgrade notification message to the user interface unit 140. The communication unit 120 may receive a selection message selecting at least a portion of software, among at least one or more of upgrade software, from the app of the user terminal 20. The communication unit 120 may write at least a portion of software to a corresponding control unit, among two or more control units, based on the selection message.

The communication unit 120 may comprise a transceiving module 121, a communication control unit 122 and a storage unit 123.

The transceiving module 121 may transceive data. The transceiving module 121 may transceiver data based on a wired and/or wireless method. The transceiving module 121 may comprise a modem illustrated in FIG. 1b.

In the embodiment, the transceiving module 121 may be a short-range wireless communication module embodying short-range wireless communication. The short-range wireless communication module may be a wireless communication module based on Wireless fidelity (WiFi), Bluetooth, radio frequency identification (RFID), infrared data association (IrDA), ultra-wideband (UWB), ZigBee and the like.

In the case where the transceiving module 121 is a short-range wireless communication module, an access point (not illustrated) may be provided in a residential space of the user. The access point may be a device that relays wireless communication between the management server 30 and the transceiving module 121 / relays wireless communication with the management server 30 and the transceiving module 121. In an example, in the case where the transceiving module 121 is a WiFi module, the access point may be a WiFi router.

In another embodiment, the transceiving module 121 may be a long-range wireless communication module embodying long-range wireless communication. The long-range wireless communication module may be a wireless communication module based on code division multiple access (CDMA), frequency division multiple access (FDMA), time division multiple access (TDMA), orthogonal frequency division multiple access (OFDMA), single carrier frequency division multiple access (SCFDMA), 5G, and the like.

The home appliance 10, as described above, may comprise a memory 123 that downloads and receives at least one or more of upgrade software from the management server 30 in advance and stores the same.

The home appliance 10 may write at least a portion of software data, selected based on the selection message received from the user interface unit 140, to the home appliance control unit 110 from the memory 123.

The home appliance 10 may download and receive software, selected based on a selection message received from the user interface unit 140, from the management server 30, and store the software in the memory 123, and write the software to the home appliance control unit 110.

The communication control unit 122 may control the transceiving module 121 and the storage unit 123. The communication control unit 122 may correspond to a micom for controlling communication. The communication control unit 122 may operate based on firmware.

In the embodiment of the present disclosure, the memory 124 for a download is configured in the communication unit 120, but the memory 124 may be configured in the home appliance control unit 110 or configured in a partial area of the internal memory of the home appliance control unit 110. The software downloaded to the memory 123 of the communication unit 120 may be transmitted and written to the internal memory of the home appliance control unit 110, based on serial communication, such that the software updates or add an existing control program / updates an existing control program or is added to an existing control program to upgrade the home appliance 10. In the case where a download area is allocated to the internal memory of the home appliance control unit 110, the home appliance 10 allocates the download area as a control area to upgrade the control area with new software after a download is completed and the home appliance 10 is rebooted.

The communication control unit 122 may store data received from the transceiving module 121, in particular, software data, in the storage unit 123. Additionally, the communication control unit 122 may transmit the software data stored in the storage unit 123 to the home appliance control unit 110, the function performance unit 130, the user interface unit 140 through a local bus.

Further, the communication control unit 122 may transmit a download inquiry message to the management server 30, and automatically download and receive software data from the management server 30.

Further, when receiving a preparation instruction message from the management server 30, the communication control unit 122 may transition to an upgrade preparation state.

Further, after the communication control unit 122 notifies the user interface unit 140 or the app of the user terminal 20 of an upgrade preparation state, the communication control unit 122 may execute an upgrade of software data selected by the user interface unit 140 or the user terminal 20, among software data.

Further, after completely upgrading software selected by the user interface unit 140 or the user terminal 20 in relation to software data, the communication control unit 122 may control the user interface unit 140 to display a message notifying that a completely upgraded individual function is settable or available on the screen of the display of the user interface unit 140 or in a voice through the speaker of the user interface unit 140.

Though not illustrated in the drawing, the communication control unit 122 may comprise a processor and an internal memory.

The processor may comprise one or more of a central processing unit (CPU), an application processor or a communication processor. The processor may operate based on firmware and execute one or more of instructions in relation to control of the home appliance 10.

The internal memory may be a volatile and/or non-volatile memory. The internal memory may store firmware, and store one or more of instructions in relation to control of the communication unit 120.

The storage unit 123 may be embodied as a memory illustrated in FIG. 2 and may be a volatile and/or non-volatile memory, and may store software data received from the transceiving module 121.

The function performance unit 130 performs a unique function of the home appliance 10. That is, the function performance unit 130 may be a component that performs a unique function provided by the home appliance 10. In an example, the unique function may be a washing function of a washing machine, a drying function of a dryer, an air-conditioning function of an air conditioner, an air-purifying function of an air purifier and the like.

Accordingly, the communication unit 120 may communicate with the management server 30 to upgrade a unique function entirely or partially. Additionally, the communication unit 120 may comprise a storage unit 123 storing information on firmware which is needed to perform a unique function.

The function performance unit 130 may comprise a function performance module 131 and a function control unit 132.

The function performance module 131 may be a module performing the function described above, and for example, comprise a driving unit, a heating unit, a cooling unit and the like comprising a motor.

The function control unit 132 may control the function performance module 131. The function control unit 132 may correspond to a micom for controlling performance of a function. The function control unit 132 may operate based on firmware.

Though not illustrated in the drawing, the function control unit 132 may comprise a processor and an internal memory. The processor and the internal memory are described above.

Further, the firmware of the communication control unit 122, the firmware of the function control unit 132, and the firmware of the interface control unit 142 may differ from one another.

The user interface unit 140 may display specific information to the user or receive data input from the user.

The user interface unit 140 may provide operation information on a unique function, information on an upgrade, through a screen or in a voice and the like. For example, the user interface unit 140 may display an upgrade notification message on a screen thereof or in a voice or vibration.

The user interface unit 140 may display and output at least one or more of lists of upgrade software data / a list of at least one or more of software data.

The user interface unit 140 may provide, on the screen thereof, an upgrade center collecting upgradable software and contents of all upgradable home appliances in a list and showing the list to an upgrade-exclusive management page.

The user interface unit 140 may provide operation information of the home appliance 10, information on an upgrade of the home appliance 10 and the like to the user. In an example, the user interface unit 140 may comprise a display module and a speaker module. Additionally, the user interface unit 140 may receive an input for controlling an operation of the home appliance 10 from the user.

The user interface unit 140 may comprise an input and output module 141 and an interface control unit 142.

The input and output module 141 may display operation information of the home appliance 10, and information in relation to an upgrade visually and/or acoustically to the user, and receive input information. In the case where the input and output module 141 is a display module, the input and output module 141 may be a display panel.

The interface control unit 142 may control the input and outlet module 141. The interface control unit 142 may correspond to a micom for controlling an interface. The interface control unit 142 may operate based on firmware.

Though not illustrated in the drawing, the interface control unit 142 may comprise a processor and an internal memory. The processor and the internal memory are described above.

Additionally, the firmware of the communication control unit 122, the firmware of the function performance control unit 132, and the firmware of the interface control unit 142 may differ from one another.

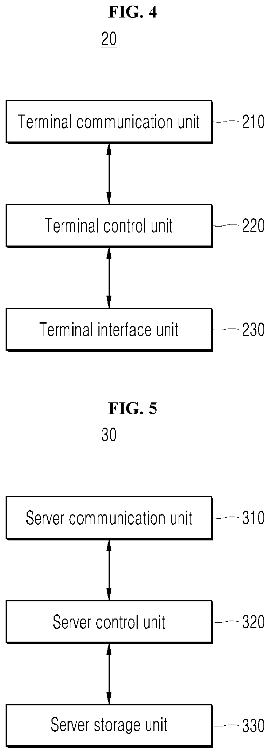

FIG. 4 is a block diagram showing a schematic configuration of a user terminal 20 of one embodiment.

Referring to FIG. 4, the user terminal 20 of the embodiment may comprise a terminal communication unit 210, a terminal control unit 220 and a terminal interface unit 230.

The terminal communication unit 210 may communicate with the management server 30. The terminal communication unit 210 may perform communication based on a wired and/or wireless method. The wireless method may comprise a short-range wireless communication method and a long-range wireless communication method.

The terminal control unit 220 may control the terminal communication unit 210 and the terminal interface unit 230.

Though not illustrated in the drawing, the terminal control unit 220 may comprise a processor and an internal memory. The internal memory may store an application for a terminal, which is used for managing the home appliance 10. The processor may execute the application for a terminal.

The terminal interface unit 230 may display an execution screen of the application for a terminal. In particular, the terminal interface unit 230 may display information on an upgrade of the home appliance 10 visually and/or acoustically.

FIG. 5 is a block diagram showing a schematic configuration of a management server 30 of one embodiment.

Referring to FIG. 5, the management server 30 of the embodiment may comprise a server communication unit 310, a server control unit 320 and a server storage unit 333.

The server communication unit 310 may communicate with the home appliance 10 and the user terminal 20. The server communication unit 310 may perform communication based on a wired and/or wireless method. The wireless method may comprise a short-range wireless communication method and a long-range wireless communication method. In the case where the server communication unit 310 connects to the home appliance 10 through a communication network, the server communication unit 310 receives a download inquiry message from the home appliance 10.

The server control unit 320 may control the server communication unit 310 and the server storage unit 330.

Though not illustrated in the drawing, the server control unit 320 may comprise a processor and an internal memory. The internal memory may store an application for a management server, which is used for managing the home appliance 10. The processor may execute the application for a management server.

The server storage unit 330 may be a volatile and/or non-volatile memory, embodied in the form of a database (DB), and store information in relation to an upgrade of the home appliance 10. The information in relation to an upgrade may comprise software data installed in the home appliance 10, information on the home appliance 10, information on the user and the like. The software data may comprise the firmware data and the content program data of the home appliance 10.

Further, the firmware data and the content program data may respectively be stored in the server storage unit 330, based on each version. In particular, the latest version of firmware data and the latest version of content program data may respectively be stored in the server storage unit 330, to upgrade software.

Further, as described above, the home appliance 10 may comprise a plurality of control units (micoms) 122, 132, 142, and the firmware of each of the plurality of control units may differ. The server storage unit 330 may store firmware data, for each of the plurality of control units 122, 132, 142.

The server control unit 320 may receive upgrade software data uploaded through an upgrade management web page. That is, the manager uploads upgrade software data to upgrade the home appliance 10 through the upgrade management web page.

At this time, the server control unit 320 automatically downloads the upgrade software data uploaded and received to the home appliance 10. Additionally, the server control unit 320 may transmit upgrade software data to the home appliance 10 each time the server control unit 320 receives a download inquiry message from the home appliance 10.

At least one or more of upgrade software data may comprise at least a portion of at least one of firmware data and at least one of content program data.

At least one or more of upgrade software data may comprise firmware data, and may further comprise at least one of content program data that are executed on firmware. At least one of content program data may respectively be any one of data on a content program that is not installed in the home appliance 10.

Further, the server control unit 320 may manage the software SW of an individual module depending on micoms constituting the home appliance 10 and the structure of a system.

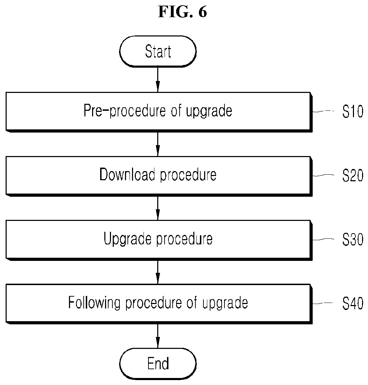

Hereinafter, in FIG. 6, the concept of a basic upgrade is described with reference to a process of upgrading software data that is performed by a home appliance upgrade system to which the subject matter of the present disclosure is not applied.

FIG. 6 is a flowchart showing a basic upgrade method of the home appliance of one embodiment.

An upgrade method may be performed respectively in relation to a plurality of home appliances 10 possessed by the user, and for convenience of description, a method for upgrading software in relation to one home appliance 10 is described with reference to FIG. 6.

The method for upgrading software may be performed by the home appliance 10, the user terminal 20 and the management server 30 that are described above, in link with one another.

Hereinafter, procedures in each step are described.

In S 10, a pre-procedure of an upgrade may be performed.

In S10, the home appliance 10 and the management server 30 may communicably connect to each other, and information on an upgrade may be stored in the server storage unit 330, and an upgrade schedule comprising an upgrade cycle, an upgrade reservation and the like may be set.

In S20 and S30, an upgrade process may be performed.

In S20, a download procedure of the upgrade process may be performed.

Specifically, the management server 30 may transmit software data to the home appliance 10. The software data transmitted from the management server 30 may be received by the communication unit 120 of the home appliance 10 and then stored. As described above, the software data transmitted may be firmware data or content program data.

The software data may comprise two or more of firmware data, and the management server 30 may consecutively transmit two or more of firmware data to the home appliance 10. That is, in the case where two or more of control units among the plurality of control units 110, 122, 132, 142 included in the home appliance 10 are upgraded, the management server 30 may consecutively transmit two or more of firmware data corresponding to the two or more of control units to the home appliance 10. The order of transmitting two or more of firmware data may be set in advance. In an example, in the case where the function control unit 132 and the interface control unit 142 are upgraded, firmware data in relation to the function control unit 132 is transmitted, and then firmware data in relation to the interface control unit 142 may be transmitted.

Alternatively, the software data may comprise two or more of content program data, and the management server 30 may consecutively transmit two or more of content program data to the home appliance 10. Two or more of content program data may respectively be data on a content program that is executed by one or more of control units among the plurality of control units 110, 122, 132, 142 included in the home appliance 10. The order of transmitting two or more of content program data may be set in advance.

Alternatively, the software data may comprise at least one of firmware data and at least one of content program data. At this time, the management server 30 may consecutively transmit at least one of firmware data and at least one of content program data.

Then, in S30, an upgrade procedure of the two procedures of the upgrade may be performed.

Specifically, the communication unit 120 may write the software data stored to a corresponding control unit among the plurality of control units 110, 132, 142. As the software data are written to the control unit, the software data may be installed in the control unit.

In the case where a plurality of software data stored in the communication unit 120 comprises two or more of firmware data, the communication unit may write each of the two or more of firmware data to a corresponding control unit / corresponding control units. The order of writing two or more of firmware data may be set in advance. In an example, in the case where the function control unit 132 and the interface control unit 142 are upgraded, firmware data in relation to the function control unit 132 are written, and then firmware data in relation to the interface control unit 142 may be written.

Alternatively, in the case where a plurality of software data stored in the communication unit 120 comprises two or more of content program data, the communication unit may write the two or more of content program data to a corresponding control unit / corresponding control units. The order of writing two or more of content program data may be set in advance.

Alternatively, in the case where a plurality of software data stored in the communication unit 120 comprises at least one of firmware data and at least one of content program data, the communication unit may write the at least one of firmware data and the at least one of content program data to a corresponding control unit / corresponding control units. The order of writing at least one of firmware data and at least one of content program data may be set in advance. In an example, in the case where the plurality of software data are firmware data and content program data in relation to the user interface unit, the firmware data may be written and then the content program data may be written.

In S40, a following procedure of the upgrade may be performed.

In an example, in S40, a detailed function of the software upgraded completely may be set. In particular, in the case where a plurality of software is upgraded completely, a detailed function of each of the plurality of software may be consecutively set.

Hereinafter, a process of upgrading software data, performed by a home appliance upgrade system of an embodiment, is described.

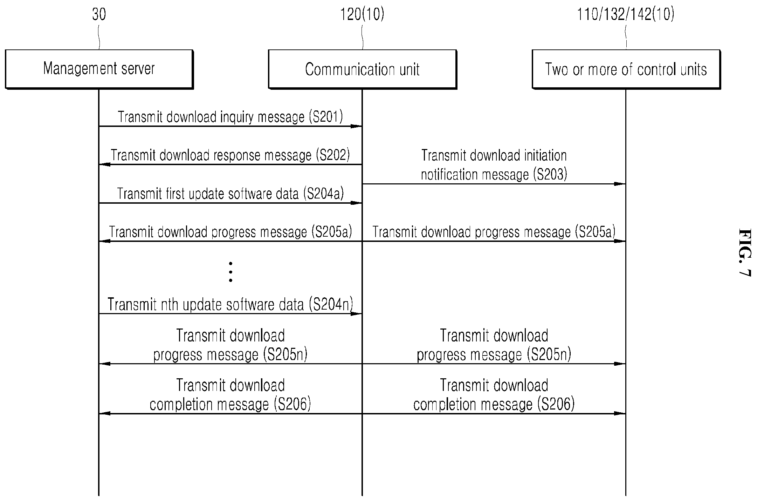

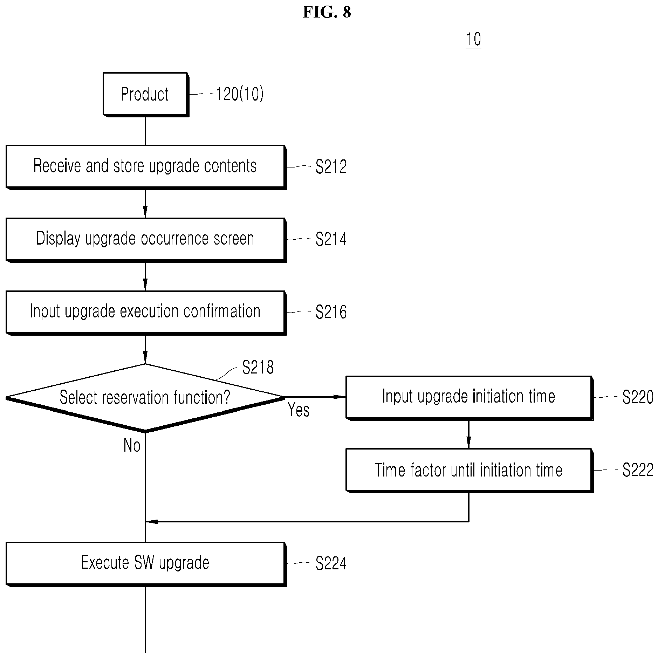

FIGS. 7 and 8 are flowcharts showing a home appliance upgrade method of one embodiment.

FIG. 7 shows a flowchart of a download procedure (S20) in the home appliance 10 upgrade method, and FIG. 8 shows a flowchart of an upgrade procedure (S30) in the home appliance 10 upgrade method.

Assume that the communication unit 120 and the management server 30 may communicably connect in advance, and the user terminal 20 and the management server 30 also communicably connect in advance, in FIG. 7 and FIG. 8.

Additionally, the download procedure (S20) may be performed in the case where an upgrade response message is transmitted to the home appliance 10 from the management server 30. At this time, assume that N numbers (integers of 2 or more) of software are upgraded.

Further, each of the N numbers of software may be firmware previously installed in a control unit or software corresponding to a content program, or new software corresponding to a new content program. In the present disclosure, an "update of software" is defined as comprising "replacing an old version of software with a new version of software" and "installing new software that is not installed in a control unit previously".

Hereinafter, the download procedure (S20) is described specifically.

Referring to FIG. 6 and FIG. 8, in the case of a home appliance upgrade system 1 of an embodiment, the management server 30 may transmit a download initiation request message to the communication unit 120, in S201.

The download initiation request message may be a message for checking whether the communication unit 120 is ready to download N numbers of update software data.

In S202, the communication unit 120 may transmit a download initiation response message as a response to the download initiation request message to the management server 30. That is, in the case where N numbers of update software data are ready to be downloaded, the communication unit 120 may transmit a download initiation response message to the management server 30.

In S203, the communication unit 120 may transmit a download initiation notification message to two or more of controls units 110, 132, 142. That is, since N numbers of upgrade software is installed in two or more of control units 110, 132, 142, the communication unit 120 may transmit a download initiation notification message to two or more of control units 110, 132, 142, to satisfy backward compatibility. However, the communication unit 120 does not transmit a download initiation notification message to the management server 30. Accordingly, the download procedure (S20) may be hidden to the user.

Additionally, S203 may be performed before a download is initiated.

In S204a, the management server 30 may transmit first upgrade software data to the communication unit 120 among the N numbers of upgrade software data. The communication unit 120 may store the first upgrade software data received in the storage unit 123. As the first upgrade software data are transmitted and stored completely, upgrade data in relation to first software among the N numbers of software are download completely.

Additionally, in S205a in the process of transmitting the first upgrade software data, the communication unit 120 may transmit a download progress message in relation to the first upgrade software data to the management server 30. The download progress message may be a message reporting a download progress in real time. Further, to satisfy backward compatibility, the communication unit 120 may further transmit a download progress message in relation to the first upgrade software data to two or more of control units 110, 132, 142.

Then, in S204n, the management server 30 may transmit n^{th} upgrade software data to the communication unit 120 among the N numbers of upgrade software data. The communication unit 120 may store the n^{th} upgrade software data received in the storage unit 123. As the n^{th} upgrade software data are transmitted and stored completely, upgrade data in relation to n^{th} software may be downloaded completely among the N numbers of software.

Further, in S205n in the process of transmitting the n^{th} upgrade software data, the communication unit 120 may transmit a download progress message in relation to the n^{th} upgrade software data to the management server 30. Further, to satisfy backward compatibility, the communication unit 120 may further transmit a download progress message in relation to the n^{th} upgrade software data to two or more of control units 110, 132, 142.

In summary, in S204 comprising S204a to S204n, the management server 30 may upload the N numbers of upgrade software data at a time and consecutively, and the communication 120 may download the N numbers of upgrade software data at a time and consecutively. Further, in S205 comprising S205a to S205n, the communication unit 120 may transmit a download progress message to the management server 30 and two or more of control units 110, 132, 142.

Further, the management server 30 and the communication unit 120 may communicably connect through a wireless communication network and the like. At this time, the download of the plurality of upgrade software data may stop due to the instability o the wireless communication network and the like. To solve the problem, continuous loading may be performed.

Specifically, in the case where the download stops, the communication unit 120 may transmit identification information of last upgrade software data received to the management server 30 among the plurality of upgrade software data. Additionally, the management server 30 may upload the plurality of upgrade software data in succession, based on the identification information. That is, the management server 30 may transmit following upgrade software data of the last upgrade software data received to the home appliance 10, based on the identification information. Thus, a continuous download procedure may be embodied.

The communication unit 120 stores the software data downloaded and received, i.e., upgrade contents, in the storage unit 123 (S212).

In S206, the communication unit 120 may transmit a download completion message to the management server 30 as the download is completed. At this time, for backward incompatibility, the communication unit 120 may further transmit a download completion message to two or more control units 110, 132, 142.

In the above description, new software for performing a predetermined upgrade is uploaded to the management server 30, and after the software is completely downloaded to the home appliance 10 from the management server 30, an upgrade is performed through the user terminal 20, but in the case where the software is not installed in the home appliance control unit 110 of the home appliance 10 and is not upgraded, the home appliance 10 provides an installation alarm of the upgrade. However, in the case where an upgrade does not proceed after new software is uploaded to the management server 30, an electrical appliance may guide this, software to be upgraded may be selected, and the execution of an upgrade is instructed, such that the software is selectively downloaded from the management server 30 and written to the home appliance control unit 110, to perform an upgrade.

Then the management server 30 may also transmit a download completion message to the user terminal 20. The user terminal 20 may display a download completion notification, based on the download completion message.

Additionally, as described above, the upgrade process may comprise a download procedure (S20) and an upgrade procedure (S30), and after the download procedure (S20) is completed, the upgrade procedure (S30) may be performed. Accordingly, a download completion notification may correspond to an upgrade initiation notification. In the case where a download and an upgrade are performed at the same time based on a selection without proceeding with a download automatically, an upgrade initiation notification may occur at a time point when new upgradable software is registered with the management server 30 or is inquired.

The management server 30 may transmit a display instruction message instructing a display of an installation notification of software to the home appliance 10 to which the software is completely downloaded.

The management server 30 may transmit a display instruction message immediately after the management server 30 receives a download completion message, or after a predetermined period, based on activity time of the user who uses a corresponding home appliance 10.

Alternatively, the management server 30 may include conditions for displaying a display instruction message in the display instruction message. A variety of conditions such as temporal conditions for displaying an installation notification or conditions indicating that the user is around the home appliance 10 or conditions for instructing a display in the case where the home appliance 10 is being used, and the like may be included in the display instruction message. The above-described notification schedule may also be included in the display instruction message.

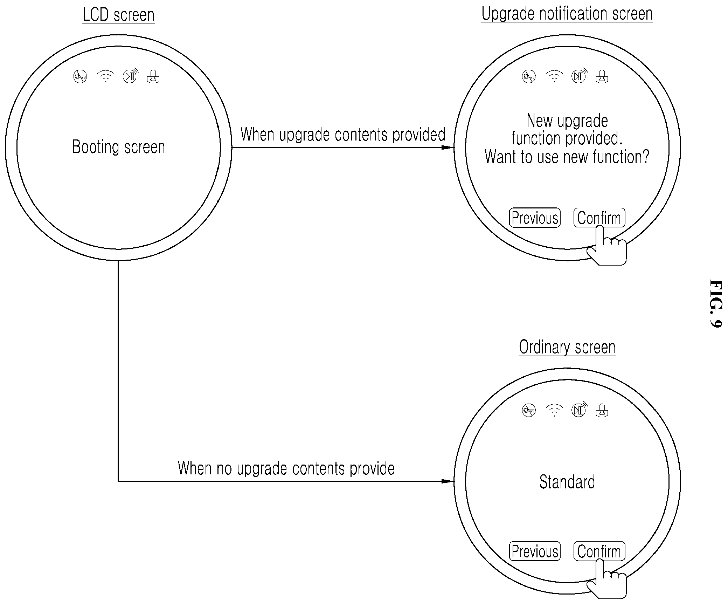

In the home appliance 10, the communication unit 120, when receiving a display instruction message from the management server 30, may display an upgrade notification message notifying that an upgrade occurs to an upgrade notification screen on the user interface unit 140 (S214), as illustrated in FIG. 9. The display method involves displaying information to the user interface unit 140 visually/acoustically. FIG. 9 is a view showing an example of a display of an upgrade notification screen in a case where new software is completely downloaded to a home appliance of an embodiment. The communication unit 120 may display an upgrade notification message through a screen and in a voice. In the case where the home appliance 10 is powered off, upgrade contents (software) downloaded are stored in the storage unit 123, and as the user turns on the home appliance 10, e.g., as a booting screen is displayed on an LCD screen, the home appliance 10 displays an upgrade notification screen. Herein, the upgrade notification screen displaying an upgrade notification message may comprise a guide message asking whether to use a new function, based on reception of an upgrade, a confirmation button confirming that an upgrade proceeds, and a previous button canceling an upgrade and returning to a previous state. The upgrade notification screen, for example, comprises a previous button and a confirmation button as well as a guide message "A new upgrade function is provided. Do you want to use a new function?". Hereinafter, an LCD screen of the home appliance 10 illustrated in FIG. 9 to FIG. 13 is given as an example, but not limited. Additionally, the upgrade notification screen may be applied to a corresponding function in the same way to all types of home appliances to which an LCD screen with confirmation and cancelation buttons is applied.

In the case where there are no new upgrade contents downloaded in the storage unit 123, the communication unit 120 displays an ordinary screen comprising a standard menu in relation to a unique function of the home appliance 10, on the screen of the user interface unit 140.

The communication unit 120 may determine whether an upgrade notification message occurs or not, by checking whether new content lists are registered, based on communication with the management server 30, each time the appliance is powered on. The management server 30 may provide a feedback to the communication unit 120 of the home appliance 10 by notifying that there are no new upgrade contents through the app of the user terminal 20 in the case where an upgrade is already done. Accordingly, the communication unit 120 does not display an upgrade notification screen.

In the case where the new upgrade contents are stored in the storage unit 123, the communication unit 120 may display an upgrade notification screen through an LCD screen as the product is powered on or stands by and then is activated.

As the user selects an upgrade on the upgrade notification screen, a repetitive notification is canceled. Further, even in the case where the user selects an upgrade cancelation, a repetitive notification may be canceled. If the user neither selects nor selects an upgrade in the state where the user sees a pop-up message only, the home appliance 10 may perform a repetitive notification based on a notification schedule.

The communication unit 120 of the home appliance 10 may control the user interface unit 140 based on a notification schedule, and the user interface unit 140 may display an installation notification repeatedly based on the notification schedule.

Certainly, in the case where / after installation of software proceeds or after a notification is output in predetermined times or greater or in the case where the user selects non-installation of software, the home appliance 10 stops a notification. Further, in the case where new software is downloaded, the home appliance 10 may start a notification again.

In the home appliance 10, the communication unit 120 may receive a input of a confirmation button input by the user in relation to execution of an upgrade from the user interface unit 140, on the upgrade notification screen (S216).

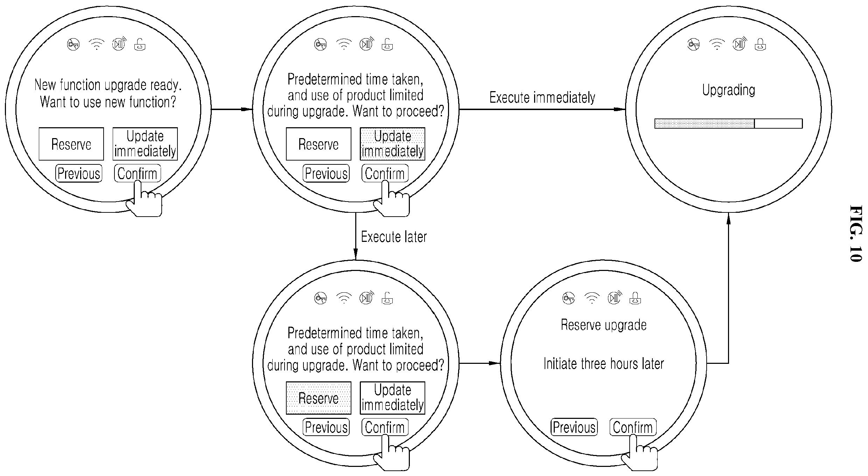

As the confirmation button is input by the user on the upgrade notification screen, the communication unit 120, as illustrated in FIG. 10, may display a warning message notifying time taken for an upgrade and notifying that the use of the product is limited during an upgrade, an immediate upgrade button executing an upgrade immediately, and a reservation button for selecting a time point available for an upgrade, on the screen of the user interface unit 140. FIG. 10 is a view showing an upgrade execution screen or a reservation screen in relation to new software in a home appliance of an embodiment.

As illustrated in FIG. 10, the communication unit 120, for example, may display an immediate upgrade button and a reservation button together with a warning message "Predetermined time will be required and the use of the product is limited during an upgrade. Do you want to proceed?".

In the case where the home appliance 10 is a refrigerator or an air conditioner that are used constantly, the communication unit 120 displays a warning message notifying that an operation stops and an upgrade proceeds to the user, and as the user sees the message, proceeds with the upgrade.

In the case where the confirmation button selected by the user is input, the communication unit 120 proceeds with an upgrade procedure of moving new upgrade contents stored in the storage unit 123 and writing the contents in the memory of an upgrade target control unit. Additionally, the communication unit 120 displays a guide message "Upgrading" on the screen of the user interface unit 140. For example, an LCD out of the user interface unit 140 of the home appliance 10 may display a phrase "Upgrading" or numbers of 00-99 to show an upgrade state.
At this time, the communication unit 120 may control the user interface unit 140, such that an LCD screen operates based on minimum power, or a segment operation of an LED screen shows numbers based on minimum power, at a time when an upgrade proceeds.

However, at a time when a reservation function is selected based on an input of the reservation button selected by the user (example of S218), the communication unit 120 provides a screen where a plurality of time points is scrolled and a specific time point is selected through the user interface unit 140.

The communication unit 120, as illustrated in FIG. 10, may receive upgrade initiation time, e.g., initiation time three hours later, input based on the user's input motion, from the user interface unit 140.

The communication unit 120, as illustrated in FIG. 8, may display a reservation message notifying an upgrade reservation, e.g., initiation three hours later, on the screen of the user interface unit 140.

The communication unit 120 calculates time until the reservation time (S222), and as the reservation time comes, executes an upgrade of moving new upgrade contents SW stored in the storage unit 123 and writing the contents in the memory of an upgrade target control unit (S224).

The communication unit 120 may visually or acoustically display a process in which an upgrade proceeds on the screen of the user interface unit 140 such that the user may see the process, while proceeding with the upgrade.

The communication unit 120 may execute an upgrade process in relation to new upgrade software in the following two ways.

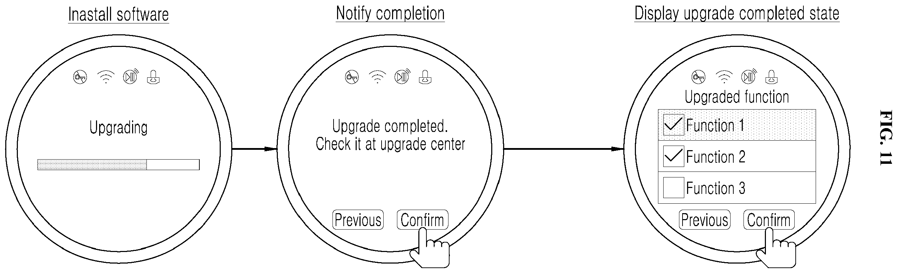

First, software is only installed without an activation process of the characteristics of a function, as illustrated in FIG. 11. FIG. 11 is a view showing an example of installation of new software only without activation of a function in a home appliance of an embodiment.

The communication unit 120 may activate all the plurality of functions completely without selecting a specific function among the plurality of functions and activating the function, in relation to software written to a corresponding control unit among two or more control units, and mark all the plurality of functions as activated on the screen of the user interface unit 130 such that the plurality of functions activated are included in an upgrade list.

The communication unit 120, as illustrated in FIG 9, may display a guide message "The upgrade is completed and check details in the upgrade center." on the screen of the user interface unit 140, for example.

At a time of entry into the upgrade center, based on the user's selection, the communication unit 120 may activate all the functions respectively and mark the functions as completely upgraded, in relation to an upgrade / upgraded function of new upgrade contents, and output the functions on a screen thereof/ the screen of the user interface unit.

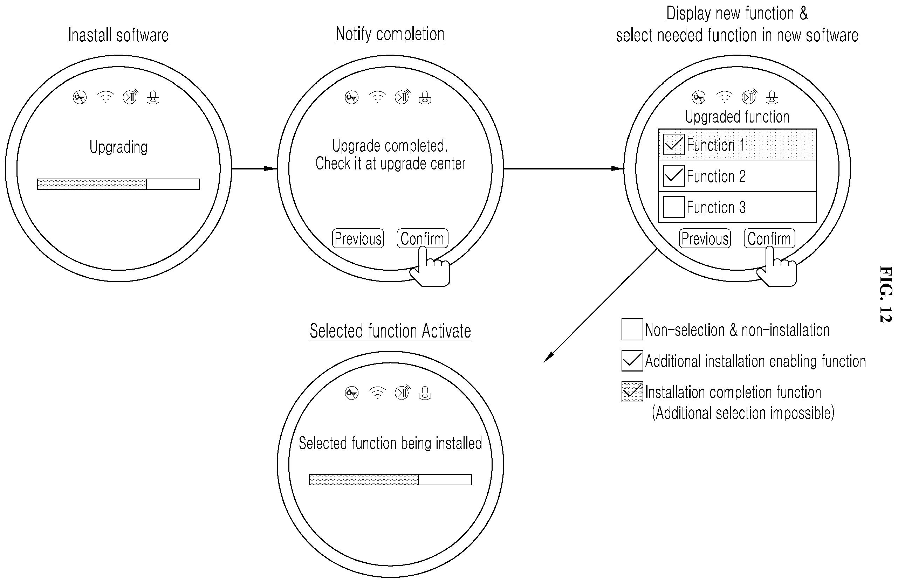

Secondly, a function desired by the user is selected and activated in new software installed in the home appliance 10, as illustrated in FIG. 12. FIG. 12 is a view showing an example of selection and activation of each function in new software installed in a home appliance of an embodiment.

The communication unit 120 displays a software installation completion message on the screen of the user interface unit 140 in relation to software written to a corresponding control unit among two or more of control units, as illustrated in FIG. 12. Then as confirmation of the software installation completion message is input, the communication unit 120 displays a list of activatable functions in the written software, on the screen of the user interface unit 140. Then in the case where at least one or more in the list of functions are selected, the communication unit 120 writes the at least one or more of functions selected to the control unit and activates the same.

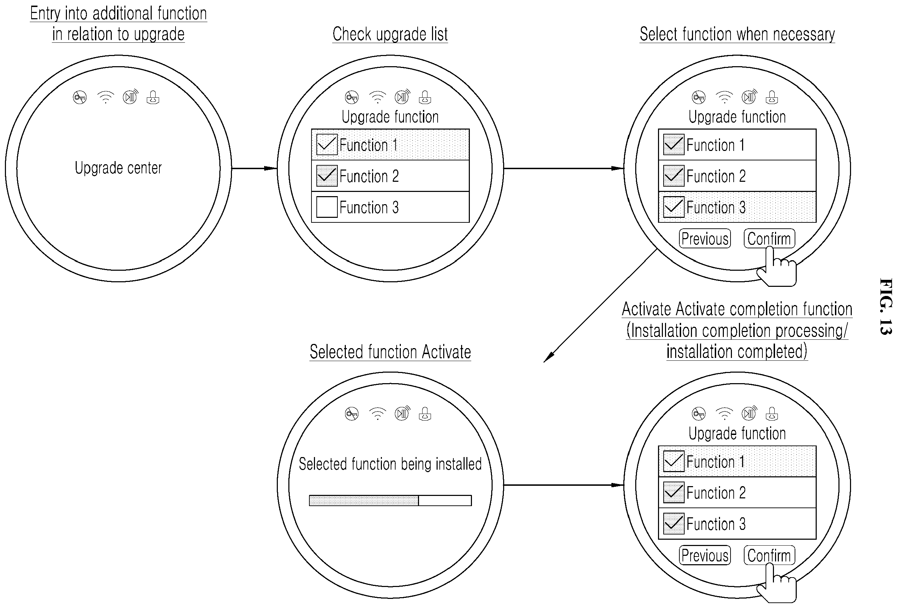

Further, the home appliance 10 may provide an upgrade center on the screen of the user interface unit 140, as illustrated in FIG. 13, such that the user sees an upgrade list. FIG. 13 is a view showing an example of provision of an upgrade center enabling a check of an upgrade list in a home appliance of an embodiment.

The user interface unit 140 may provide an upgrade center collecting upgradable software and contents of all upgradable home appliances in a list, and showing the list to an upgrade-exclusive management page, on the screen thereof, as illustrated in FIG. 13.

The home appliance 10 provides an upgrade list in relation to at least one or more of software written and installed completely in a control unit, among at least one or more of upgrade software data downloaded completely, to the upgrade center. One software among at least one or more of software installed completely in the upgrade list provided by the upgrade center comprises a list of a plurality of functions marked as activated or non-activated, as illustrated in FIG. 13.

A illustrated in FIG. 13, In the case where at least one or more of functions among the plurality of functions marked as non-activated are selected, and installation of a function is input in the upgrade center, the communication unit 120 writes the at least one or more of functions selected to a control unit and activates the functions, and marks the functions as activated in the upgrade list, and displays the functions on the screen of the user interface unit 140.

The communication unit 120 may provide a list of upgradable software among at least one or more of upgrade software data downloaded completely to the upgrade center, and receives a selection message selecting at least a portion of software from the user interface unit 140 in the list of upgradable software, and based on the selection message, write the at least a portion of software to a corresponding control unit out of two or more control units.

The communication unit 120 may output an upgrade notification message to the user interface unit 140 at a time point when a unique function of the home appliance starts or each time the home appliance is powered on, and after the unique function of the home appliance starts, may only provide a function of checking a completely upgraded list and an upgradable software list among at least one or more of upgrade software data without writing at least a portion of software to a control unit among at least one or more of upgrade software.

The control unit to which software is written adds the function of specific contents in the upgrade center, in the case where the specific contents are selected and activated in the written software and the function of the specific contents is manipulated through the user interface unit 140, and as the function of the specific contents is executed based on an input from the user interface unit 140, may display relevant sub items in the upgrade center to select the relevant sub items.

As specific contents are selected and activated in the written software, the control unit may display a guide message guiding the user to see an additional function of the specific contents upgraded on the screen of the user interface unit, and as confirmation of the guide message is input, the control unit may display the upgrade center to the screen of the user interface unit 140 and provide sub items of the specific contents in a list, in the upgrade center.

As a previous button canceling an upgrade and returning to a previous state is input from the user interface unit, the communication unit 120 may output an initial screen comprising the upgrade center to the user interface unit 140, and as the upgrade center is selected on the initial screen, may display an upgrade notification message on the first page of the upgrade center.

Additionally, as the management server 30 receives a download completion message from the home appliance 10, the management server 30 may transmit an upgrade preparation message to the app of the user terminal 20.

At this time, the user terminal 20 may display upgrade notification information in a voice through a speaker or on a screen thereof, based on the upgrade preparation message received from the management server 30. Accordingly, the user may recognize a new upgrade for the home appliance 10 through the app of the user terminal 20.

If the user selects the upgrade, a repetitive notification may be canceled. Additionally, even in the case where the user cancels the upgrade, a repetitive notification may be canceled.

If the user neither selects nor cancels the upgrade, in the state where the user sees a pop-up message only, the user terminal 20 may repeat a notification based on a notification schedule.

The user terminal 20 may be a mobile phone, a smart phone, a lap top, a tablet and the like, and the user may select whether to perform an upgrade in relation to an upgrade preparation message output to a pop-up and the like on the user terminal 20. The selection may be divided into a selection of requesting an upgrade and a selection of canceling an upgrade.

The user terminal 20 may transmit an upgrade request message to the management server 30, based on the user's input.

The management server 30 may transmit an upgrade instruction message instructing an upgrade of new software to the home appliance 10.

Having received the upgrade instruction message, the home appliance 10 may display an installation process selectively while upgrading and installing the new software.

The home appliance 10 may upgrade the function of a product in the state where the home appliance 10 connects to a network such as a Wi-Fi and the like. After new software providing a new function is registered with the management server 30, the home appliance 10 downloads and receives the software and is upgraded, and then visually, acoustically notifies the user that a new function is added. Then as the upgrade is completed, the home appliance 10 may be rebooted.

Then as the upgrade of the new software is completed, the home appliance 10 may transmit an upgrade completion message to the management server 30.

In the management server 30, the server communication unit 310 receives a message notifying that an individual function is completely upgraded, from the home appliance 10.

At this time, in the management server 30, the server control unit 320 may transmit a message notifying that an individual function is settable or available, based on completion of an upgrade of the home appliance 10, to the home appliance 10 or the app of the user terminal 20.

In the home appliance 10, the communication unit 120 may display a message notifying that an individual function upgraded completely is settable or available to the input and output module 141 of the user interface unit 140 on a screen, or in a voice through a speaker after an upgrade in relation to the individual function of the new software is completed, .

In the case where the management server 30 receives an upgrade completion message from the home appliance 10, the management server 30 may transmit the upgrade completion message to the user terminal 20.

The user terminal 20 may display a message (S43f) notifying that the upgrade is completed, and accordingly, the user may see the function upgraded completely.

Then the user terminal 20 may display a screen controlling the upgraded function. The user terminal 20, for example, may give an instruction to set or change a function to a washing machine that is the home appliance 10, and the instruction may be delivered to the washing machine via the management server 30.

In the case of a home appliance upgrade system 1 according to the present disclosure, as described above, the user may select and upgrade software to be upgraded directly in the home appliance 10 without using a smart phone.

An upgrade may be possible selectively on the app of the user terminal 20.

At a time when the user terminal 20 inquires an upgrade function, the management server 30 delivers an upgrade list in a preparation state to the user terminal 20. The user terminal 20 may select software from the delivered list and transmit an upgrade initiation instruction. As the initiation instruction is transmitted from the user terminal 20, the home appliance 10 and the management server 30 fall into an upgrading state, and as an upgrade is completed, change into a completely upgraded state, and the management server 30 notifies results of the upgrade to the product of the home appliance 10 and the app of the user terminal 20.

Accordingly, after the upgrade is completed, each of the upgraded functions changes into an available state on the app of the user terminal 20 and the product display of the home appliance 10, and the upgraded functions may be used.

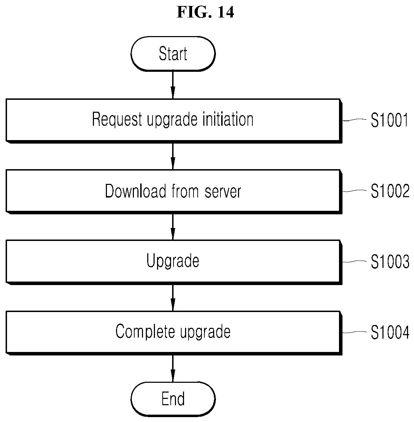

FIG. 14 is a view showing an upgrade process of another embodiment.

As upgrade particulars to be applied to the home appliance are newly registered with the management server 30, an upgrade may proceed after a selection and download based on the flow of FIG. 14. FIG. 14 shows an embodiment of initiation of a download of software based on the user's selection and request of an upgrade before the download of the software to the home appliance.

As software such as programs, data and the like needed for an upgrade is registered with the management server 30, upgradable software is inquired, and a list of upgradable software is displayed through the user interface unit 140 of the home appliance 10 or the app of the user terminal 20.

Additionally, as the user selects one or more of the upgradable software through the user interface unit 140 of the home appliance 10 or the app of the user terminal 20, the home appliance 10 or the user terminal 20 requests upgrade initiation to the management server 30 (S1001).

Then the home appliance 10 downloads the selected software from the management server 30 (S1002).

As the download is completed, the home appliance 10 proceeds with an upgrade by installing/writing the downloaded software to the home appliance control unit 110 (S 1003).

As the upgrade is completed (S 1004), the home appliance 10 may perform rebooting.

Additionally, the user interface unit 140 of the home appliance 10 or the app of the user terminal 20 may notify or display an upgraded function.

According to the present disclosure, a home appliance upgrade system, a home appliance and a home appliance upgrade method may be provided such that software of a product may be upgraded without using the app of the smart phone in a home appliance comprising a refrigerator, a washing machine, and air conditioner and the like.

The embodiments are described above with reference to a number of illustrative embodiments thereof. However, the subject matter of the present disclosure is limited to the embodiments and drawings set forth herein, and numerous other modifications and embodiments may be devised by one skilled in the art. Further, the effects and predictable effects based on the configurations in the disclosure are to be included within the range of the disclosure though not explicitly described in the description of the embodiments.

### [Industrial Applicability]

The subject matter of the present disclosure may be applied to a home appliance comprising a refrigerator, a washing machine, an air conditioner and the like.

## Claims

1. A home appliance, comprising:
a communication unit configured to communicate with a management server;
a user interface unit configured to output specific information to a user and to receive input information; and
a control unit in which software is installed,
wherein the communication unit is configured to transmit an upgrade inquiry message of the home appliance to the management server without user intervention, to download at least one or more of upgrade software data received from the management server, based on the upgrade inquiry message, and to transmit a download completion message to the management server in a case where the download is completed, and
the communication unit is configured to output an upgrade notification message to the user interface unit, to receive a selection message selecting at least a portion of software among the at least one or more of upgrade software from the user interface unit, and to write the at least a portion of software to the control unit, based on the selection message.

2. The home appliance of claim 1, wherein the upgrade notification message comprises a guide message configured to ask whether to use a new function, based on reception of an upgrade, a confirmation button configured to proceed with an upgrade, and a previous button configured to cancel an upgrade and to return to a previous state.

3. The home appliance of claim 2, wherein as the confirmation button is input, the communication unit displays a warning message notifying time taken for an upgrade and notifying that use of a product is limited during an upgrade, an immediate upgrade button configured to execute an upgrade immediately, and a reservation button configured to select a time point when an upgrade is possible, on a screen of the user interface unit.

4. The home appliance of claim 3, wherein as the reservation button is input, the communication unit provides a screen on which a plurality of time points is scrolled and a specific time point is selected through the user interface unit.

5. The home appliance of claim 1, wherein the communication unit transmits the upgrade inquiry message to the management server each time power is turned on, and downloads at least one or more of upgrade software data received from the management sever and stores the at least one or more of upgrade software data in a storage unit, based on the upgrade inquiry message.

6. The home appliance of claim 1, wherein in relation to the software written to the control unit, the communication unit completely activates all of a plurality of functions without selecting and activating a specific functions among the plurality of functions, marks all the plurality of functions as activated, and displays all the plurality of functions on a screen of the user interface unit, such that all the plurality of functions is included in an upgrade list.

7. The home appliance of claim 1, wherein in relation to the software written to the control unit, the communication unit displays a software installation completion message on a screen of the user interface unit, as confirmation of the software installation completion message is input, displays a list of activatable functions in the written software on the screen of the user interface unit, and as at least one or more of functions are selected in the list of functions, writes the at least one or more of functions selected to the control unit and activates the at least one or more of functions selected.

8. The home appliance of claim 1, wherein the user interface unit provides an upgrade center configured to collect upgradable software and contents of all of upgradable home appliances in a list and to show the list to an upgrade-exclusive management page, on a screen thereof.

9. The home appliance of claim 8, wherein the home appliance provides an upgrade list in relation to at least one or more of software completely written to and installed in the control unit, to the upgrade center, among the at least one or more of upgrade software data completely downloaded, and
in the upgrade list, one software among the at least one or more of software completely installed comprises a list of a plurality of functions marked as activated or non-activated.

10. The home appliance of claim 9, wherein as at least one or more of functions among a plurality of functions marked as non-activated are selected and function installation is input in the upgrade center, the communication unit writes the at least one or more of functions selected to the control unit and activates the at least one or more of functions selected, and marks the at least one or more of functions selected as activated in the upgrade list and displays the at least one or more of functions selected on the screen of the user interface unit.

11. The home appliance of claim 8, wherein the communication unit provides a list of upgradable software to the upgrade center, among the at least one or more of upgrade software data completely downloaded, and
the communication unit receives a selection message selecting at least a portion of software in the list of upgradable software from the user interface unit, and based on the selection message, writes the at least a portion of software to the control unit.

12. The home appliance of claim 8, wherein the communication unit outputs the upgrade notification message to the user interface unit at a time point when a unique function of a home appliance starts or each time power is turned on, and
after the unique function of the home appliance starts, the communication unit does not write at least a portion of software to the control unit, among the at least one or more of upgrade software, and in the upgrade center, only checks a completely upgraded list and a list of upgradable software among the at least one or more of upgrade software data.

13. The home appliance of claim 1, wherein the at least one or more of upgrade software data comprise at least a portion of at least one of firmware data and at least one of content program data.

14. The home appliance of claim 1, wherein the at least one or more of upgrade software data comprise firmware data, and further comprise at least one of content program data executed on the firmware, and
the at least one of content program data respectively is any one of data in relation to a content program that is not installed in the home appliance.

15. The home appliance of claim 1, wherein the communication unit outputs the upgrade notification message to the user interface unit and transmits the upgrade notification message to an app of a user terminal,
the communication unit receives a selection message selecting at least a portion of software from the app of the user terminal, among the at least one or more of upgrade software, and
the communication unit writes the at least a portion of software to the control unit, based on the selection message.

16. The home appliance of claim 8, wherein as specific contents are selected and activated in the written software and a function of the specific contents is manipulated through the user interface unit, the control unit to which the software is written adds the function of the specific contents into the upgrade center, and as the function of the specific contents is performed based on an input from the user interface unit, the control unit displays relevant sub items in the upgrade center such that the relevant sub items are selected.

17. The home appliance of claim 16, wherein as specific contents are selected from the written software and activated, the control unit outputs a guide message guiding the user to see an additional function of the specific contents upgraded on the screen of the user interface unit, and
as confirmation of the guide massage is input, the control unit displays the upgrade center on the screen of the user interface unit, and provides the sub items of the specific contents in a list in the upgrade center.

18. The home appliance of claim 8, wherein in a case where the previous button configured to cancel an upgrade and return to a precious state is input from the user interface unit, the communication unit displays an initial screen comprising the upgrade center on the user interface unit, and as the upgrade center is selected on the initial screen, the communication unit displays the upgrade notification message on a first page of the upgrade center.

19. A home appliance upgrade method, comprising:
(a) transmitting an upgrade inquiry message of the home appliance to a management server without user intervention by a communication unit;
(b) downloading and receiving at least one or more of upgrade software data received from the management server by the communication unit, based on the upgrade inquiry message;
(c) transmitting a download completion message to the management server by the communication unit;
(d) outputting an upgrade notification message to the user interface unit by the communication unit;
(e) receiving a selection message selecting at least a portion of software by the communication unit among the at least one or more of upgrade software from the user interface unit, without linking with an app of a user terminal; and
(f) writing the at least a portion of software to a control unit by the communication unit, based on the selection message.

20. The home appliance upgrade method of claim 19, wherein in (e), the selection message is one of an immediate upgrade message executing an upgrade immediately or a reservation message comprising an upgrade execution time point, and
in a case where the selection message is the reservation message, the communication unit writes the at least a portion of software to the control unit if a unique function of an appliance is performed when an upgrade is executed based on the reservation message at the upgrade execution time point, after the unique function of the appliance ends.

21. The home appliance upgrade method of claim 19, wherein rebooting is performed after (e), and as specific contents are selected from the written software through the user interface unit after the rebooting, in relation to setting of a function in relation to the software written to the control unit, the communication unit activates the specific contents selected, and sets a function of the specific contents.

22. The home appliance upgrade method of claim 21, wherein as the function of the specific contents is set in the written software and the function of the specific contents is manipulated through the user interface unit, the control unit adds the function of the specific contents into the upgrade center, and as the function of the specific contents is executed based on an input from the user interface unit, the control unit displays relevant sub items in the upgrade center such that the relevant sub items are selected.

23. The home appliance upgrade method of claim 19, where in (f), the communication unit writes an upgrade state as displayable power or as power capable of displaying numbers in a segment display, on a screen of the user interface unit, when the communication unit writes the at least a portion of software to the control unit based on the selection message.

24. The home appliance upgrade method of claim 19, wherein in (d), the communication unit outputs the upgrade notification message to the user interface unit at a time point when a unique function of a home appliance starts or each time power is turned on, and
in (f), after the unique function of the home appliance starts, the communication unit does not write at least a portion of software to the control unit, among the at least one or more of upgrade software, and in the upgrade center, only checks a completely upgraded list and a list of upgradable software among the at least one or more of upgrade software data.

25. The home appliance upgrade method of claim 24, wherein after (f), in a case where the communication unit provides an upgrade list in relation to at least one or more of software completely written to and installed in the control unit to the upgrade center among the at least one or more of upgrade software data completely downloaded, at least one or more of functions are selected among a plurality of functions marked as non-activated in the upgrade list provided to the upgrade center, and function installation is input, the communication unit writes the at least one or more of functions selected to the control unit, activates the at least one or more of functions selected, and marks the at least one or more of functions selected as activated in the upgrade list and displays the at least one or more of functions selected on a screen of the user interface unit.

26. A home appliance upgrade system, comprising:
a management server configured to provide at least one or more of upgrade software; and
a home appliance which comprises a user interface unit configured to display a list of the at least one or more of upgrade software, receives a selection message selecting at least a portion of software among the at least one or more of upgrade software from the user interface unit, and writes the at least a portion of software selected to a control unit based on the selection message.

27. The home appliance upgrade system of claim 26, wherein the home appliance comprises a memory configured to download and receive the at least one or more of upgrade software in advance from the management server and store the same, and
the home appliance writes the at least a portion of software selected to the control unit from the memory based on the selection message received.

28. The home appliance upgrade system of claim 26, wherein the home appliance downloads and receives the selected software from the management server and store the same in the memory based on the selection message received, and writes the same to the home appliance control unit.
